(19) Europäisches Patentamt
European Patent Office
Office européen des brevets

(11) **EP 2 835 633 B1**

(12) **EUROPEAN PATENT SPECIFICATION**

(45) Date of publication and mention of the grant of the patent:
**23.03.2016 Bulletin 2016/12**

(51) Int Cl.:
*G01N 27/04* [(2006.01)]     *G01N 27/24* [(2006.01)]

(21) Application number: **14460049.1**

(22) Date of filing: **04.08.2014**

(54) **A method for measuring homogeneity of electric current conducting materials**

Verfahren zur Messung der Homogenität von stromleitenden Materialien

Procédé de mesure de l'homogénéité de matériaux conducteurs de courant électrique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.08.2013 PL 40500713**

(43) Date of publication of application:
**11.02.2015 Bulletin 2015/07**

(73) Proprietors:
• **Wydzial Fizyki Uniwersytet W Bialymstoku**
  **15-245 Bialystok (PL)**
• **MTC Sp. z o.o.**
  **31 105 Krakow (PL)**

(72) Inventor: **Szymanski, Krzysztof Rafal**
  **15-337 Bialystok (PL)**

(56) References cited:
**US-A1- 2004 183 554**

• **KRZYSZTOF SZYMANSKI ET AL: "Van der Pauw method on a sample with an isolated hole", PHYSICS LETTERS A, vol. 377, no. 8, 11 January 2013 (2013-01-11), pages 651-654, XP055155462, ISSN: 0375-9601, DOI: 10.1016/j.physleta.2013.01.008**
• **JOSEF NÁHLÍK ET AL: "Study of quantitative influence of sample defects on measurements of resistivity of thin films using van der Pauw method", MEASUREMENT, INSTITUTE OF MEASUREMENT AND CONTROL. LONDON, GB, vol. 44, no. 10, 22 August 2011 (2011-08-22), pages 1968-1979, XP028320195, ISSN: 0263-2241, DOI: 10.1016/J.MEASUREMENT.2011.08.023 [retrieved on 2011-08-27]**
• **HAAREN VAN J A M M ET AL: "SIX-PROBE RESISTANCE MEASUREMENTS", PHYSICAL REVIEW, B. CONDENSED MATTER, AMERICAN INSTITUTE OF PHYSICS. NEW YORK, US, vol. 38, no. 12, 15 October 1988 (1988-10-15), pages 8342-8357, XP000407044, ISSN: 0163-1829, DOI: 10.1103/PHYSREVB.38.8342**

EP 2 835 633 B1

**Description**

The subject of the present invention is a method for measuring the homogeneity of electric current conducting materials.

A method for determining the electrical resistivity of materials with the use of a four-point technique is described by W. Hain in the paper "Monitoring material property transformations with electrical resistivity" (Materials Evaluation 47, 1989, pp. 619-630) and by R.L. Cohen and K.W. West in "Characterization of metals and alloys by electrical resistivity measurements" (Materials Evaluation 41, 1983, pp.1074-1077). The method consists in four contacts, denoted as $a$, $b$, $c$, and $d$, being located on the surface of a sample, with electric current $I_{ab}$ flowing between two contacts $a$ and $b$, and voltage $U_{cd}$ measured between contacts $c$ and $d$. Based on the ratio of two electrical quantities expressing the four-point resistance $R = U_{cd}/I_{ab}$, the locations of the contacts, and the geometrical dimensions of the sample, it is possible to determine the electrical resistivity of the material. Methods of this type require the locations of individual contacts to be known. Current distribution equations can be solved for given contact locations.

There is a known method for measuring the ratio of electrical resistivity to sample thickness (or resistivity per unit area) for homogenous flat samples of arbitrary shape (cf. L. J. van der Pauw, Philips Research Reports 13, 1, 1958, and L. J. van der Pauw, Philips Technical Review 20, 220, 1958). In that method, four point contacts are located on the sample edge at arbitrary positions. This is an extremely valuable merit of the method, because it does not involve measurement of contact positions. Thus, the method is not influenced by experimental error related to the necessity of determining the coordinates of the contacts. A characteristic feature of the method is that, although it can be used for flat samples of arbitrary shape, the samples must not have any inhomogeneities in the form of, for example, holes.

Using solutions of equations representing electric current distribution in homogenous flat samples with large dimensions compared to the distance between contacts, the author of patent US6943571B2 has revealed a method to measure the resistance per unit area of a material using a multi-point probe, including four or more point contacts placed collinearly in the interior of the sample surface far from its edge. The method is based on repeated measurements taken by means of the four-point method, which eliminates the necessity of measuring contact locations.

The methods used to measure the resistivity of electric current conducting materials, but is not suited for determination of the degree of homogeneity.

Szymanski et al. (Physics Letters A 377, 2013, pp. 651-654) tests the applicability of the classic van der Pauw method for samples containing an isolated hole. The method is based on measurements of four-point resistances using four contacts in several different contact configurations on the sample. The resulting data points of resistivity obey an inequality which can be used for experimental detection of sample quality. However, a high number of measurements in different contact configurations is necessary for a statistical relevant result.

The essence of the invention is to provide a method for measuring the homogeneity of an electric current conducting material. The method consists in taking measurements of few four-point resistances, characterised by at least six contacts being arbitrarily arranged in six different points on the edge of a sample of the examined material of arbitrary shape and at least six four-point resistances being measured. The degree of homogeneity of the sample is determined with the use of the theory of current distribution on a two-dimensional sample with an isolated hole.

In the method according to the present invention, the contacts are preferably arranged in such a way that the six four-point resistances have the same value. The accuracy in determining the homogeneity parameter can therefore be optimized.

The known value of resistance per unit surface area can also be used to increase the accuracy in determining the homogeneity parameter.

The known value of the sample's resistance per unit area and the known positions of contacts can likewise be used to further increase the accuracy in determining the homogeneity parameter.

The method for measuring the homogeneity of material samples consists in determining the dimensionless homogeneity parameter $h$ by measuring four-point resistances in a system of six contacts located arbitrarily on the edge of the sample. The homogeneity parameter $h$ is determined by using knowledge of the rules governing the physical phenomenon of electric current distribution in a two-dimensional system of a homogeneous sample of arbitrary shape with an isolated hole. The theory of electric current distribution in a two-dimensional system representing a homogenous sample of arbitrary shape with an isolated hole provides that electric currents and voltages are invariant with respect to conformal transformations. This means that the voltages measured for an arbitrary shape will be the same as those measured for any other shape obtained by a conformal transformation. The essential idea of the present invention is that the set of voltages measured on the edge of the material sample contains information about the isolated hole. The theory of the phenomenon provides further that the method by which such information is acquired does not depend on the shape of the sample. Therefore, the way in which information about the size of the hole is acquired will be the same both for the an annulus and for a sample of an arbitrary shape.

Table 1 contains a list of symbols representing nine four-point resistances, $r_1$, $r_2$, $r_3$, $r_4$, $r_5$, $r_6$, $r_7$, $r_8$, and $r_9$, obtained from six contacts distributed on the sample edge at six different points, denoted as $a$, $b$, $c$, $d$, $e$, and $f$.

Table 1

| Four-point resistance symbol | Current contacts | Voltage contacts |
|---|---|---|
| $r_1$ | ab | ef |
| $r_2$ | bc | fa |
| $r_3$ | cd | ab |
| $r_4$ | de | bc |
| $r_5$ | ef | cd |
| $r_6$ | fa | de |
| $r_7$ | ab | de |
| $r_8$ | bc | ef |
| $r_9$ | cd | fa |

To determine the degree of homogeneity, measurements of the respective four-point resistances are taken with contacts located on the sample's edge. Next, the degree of homogeneity h is determined from a system of equations dependent on the measured four-point resistances $r_i$ in which the unknowns are the homogeneity parameter $h$ and dimensionless positions $\varphi_1$, $\varphi_2$, $\varphi_3$, $\varphi_4$, and $\varphi_5$. The system of equations has the form

$$r_1 = \frac{\Sigma}{m} \ln \frac{G(\varphi_1 + \varphi_2, h)G(\varphi_1 + \varphi_6, h)}{G(\varphi_1, h)G(\varphi_1 + \varphi_2 + \varphi_6, h)},$$

$$r_2 = \frac{\Sigma}{m} \ln \frac{G(\varphi_2 + \varphi_3, h)G(\varphi_1 + \varphi_2, h)}{G(\varphi_2, h)G(\varphi_1 + \varphi_2 + \varphi_3, h)},$$

$$r_3 = \frac{\Sigma}{m} \ln \frac{G(\varphi_3 + \varphi_4, h)G(\varphi_2 + \varphi_3, h)}{G(\varphi_3, h)G(\varphi_2 + \varphi_3 + \varphi_4, h)},$$

$$r_4 = \frac{\Sigma}{m} \ln \frac{G(\varphi_4 + \varphi_5, h)G(\varphi_3 + \varphi_4, h)}{G(\varphi_4, h)G(\varphi_1 + \varphi_2 + \varphi_6, h)},$$

$$r_5 = \frac{\Sigma}{m} \ln \frac{G(\varphi_5 + \varphi_6, h)G(\varphi_4 + \varphi_5, h)}{G(\varphi_5, h)G(\varphi_1 + \varphi_2 + \varphi_3, h)},$$

$$r_6 = \frac{\Sigma}{m} \ln \frac{G(\varphi_1 + \varphi_6, h)G(\varphi_5 + \varphi_6, h)}{G(\varphi_6)G(\varphi_2 + \varphi_3 + \varphi_4)},$$

$$r_7 = \frac{\Sigma}{m} \ln \frac{G(\varphi_1 + \varphi_2 + \varphi_3, h)G(\varphi_2 + \varphi_3 + \varphi_4, h)}{G(\varphi_2 + \varphi_3, h)G(\varphi_5 + \varphi_6, h)},$$

$$r_8 = \frac{\Sigma}{m} \ln \frac{G(\varphi_2 + \varphi_3 + \varphi_4, h)G(\varphi_1 + \varphi_2 + \varphi_6, h)}{G(\varphi_3 + \varphi_4, h)G(\varphi_1 + \varphi_6, h)},$$

$$r_9 = \frac{\Sigma}{m} \ln \frac{G(\varphi_1 + \varphi_2 + \varphi_3, h)G(\varphi_1 + \varphi_2 + \varphi_6, h)}{G(\varphi_4 + \varphi_5, h)G(\varphi_1 + \varphi_2, h)},$$

where

$$\Sigma = \sum_{i=1}^{9} r_i, \quad m = \ln g,$$

$$g = \frac{G(\varphi_1 + \varphi_2, h)G(\varphi_2 + \varphi_3, h)G(\varphi_3 + \varphi_4, h)G(\varphi_4 + \varphi_5, h)G(\varphi_5 + \varphi_6, h)G(\varphi_1 + \varphi_6, h)}{G(\varphi_1, h)G(\varphi_2, h)G(\varphi_3, h)G(\varphi_4, h)G(\varphi_5, h)G(\varphi_6, h)},$$

and function G is defined as an infinite product

$$G(\varphi, h) = \left| \sin \frac{\varphi}{2} \right| \prod_{n=1}^{\infty} \left( 1 - \frac{\cos \varphi}{\cosh hn} \right).$$

Position $\varphi_6$ appearing in the system of equations is given from condition

$$\varphi_1 + \varphi_2 + \varphi_3 + \varphi_4 + \varphi_5 + \varphi_6 = 2\pi.$$

The dimensionless parameter denoted $h$ and called the degree of sample homogeneity belongs to the interval $(0, \infty)$. In case of a perfectly homogeneous sample, the value of the homogeneity parameter is infinite. The system of equations comprises nine nonlinear equations with six unknowns, i.e., the degree of homogeneity $h$ and five independent variables representing positions $\varphi_1$, $\varphi_2$, $\varphi_3$, $\varphi_4$, and $\varphi_5$. One can arbitrarily choose six equations from among the nine and solve the system of six equations with respect to the six unknowns $h$, $\varphi_1$, $\varphi_2$, $\varphi_3$, $\varphi_4$, and $\varphi_5$. Each of such choices leads to the same solution, and thus to the unique determination of the value of the homogeneity parameter $h$. The system of equations can be solved with the use of the minimisation method by defining a quantity $\chi^2$ as

$$\chi^2 = \left( \frac{r_1}{\Sigma} - \frac{1}{m} \ln \frac{G(\varphi_1 + \varphi_2, h)G(\varphi_1 + \varphi_6, h)}{G(\varphi_1, h)G(\varphi_1 + \varphi_2 + \varphi_6, h)} \right)^2$$

$$+ \left( \frac{r_2}{\Sigma} - \frac{1}{m} \ln \frac{G(\varphi_2 + \varphi_3, h)G(\varphi_1 + \varphi_2, h)}{G(\varphi_2, h)G(\varphi_1 + \varphi_2 + \varphi_3, h)} \right)^2$$

$$+ \left( \frac{r_3}{\Sigma} - \frac{1}{m} \ln \frac{G(\varphi_3 + \varphi_4, h)G(\varphi_2 + \varphi_3, h)}{G(\varphi_3, h)G(\varphi_2 + \varphi_3 + \varphi_4, h)} \right)^2$$

$$+ \left( \frac{r_4}{\Sigma} - \frac{1}{m} \ln \frac{G(\varphi_4 + \varphi_5, h)G(\varphi_3 + \varphi_4, h)}{G(\varphi_4, h)G(\varphi_1 + \varphi_2 + \varphi_6, h)} \right)^2$$

$$+ \left( \frac{r_5}{\Sigma} - \frac{1}{m} \ln \frac{G(\varphi_5 + \varphi_6, h)G(\varphi_4 + \varphi_5, h)}{G(\varphi_5, h)G(\varphi_1 + \varphi_2 + \varphi_3, h)} \right)^2$$

$$+ \left( \frac{r_6}{\Sigma} - \frac{1}{m} \ln \frac{G(\varphi_1 + \varphi_6, h)G(\varphi_5 + \varphi_6, h)}{G(\varphi_6)G(\varphi_2 + \varphi_3 + \varphi_4)} \right)^2$$

$$+ \left( \frac{r_7}{\Sigma} - \frac{1}{m} \ln \frac{G(\varphi_1 + \varphi_2 + \varphi_3, h)G(\varphi_2 + \varphi_3 + \varphi_4, h)}{G(\varphi_2 + \varphi_3, h)G(\varphi_5 + \varphi_6, h)} \right)^2$$

$$+ \left( \frac{r_8}{\Sigma} - \frac{1}{m} \ln \frac{G(\varphi_2 + \varphi_3 + \varphi_4, h)G(\varphi_1 + \varphi_2 + \varphi_6, h)}{G(\varphi_3 + \varphi_4, h)G(\varphi_1 + \varphi_6, h)} \right)^2$$

$$+ \left( \frac{r_9}{\Sigma} - \frac{1}{m} \ln \frac{G(\varphi_1 + \varphi_2 + \varphi_3, h)G(\varphi_1 + \varphi_2 + \varphi_6, h)}{G(\varphi_4 + \varphi_5, h)G(\varphi_1 + \varphi_2, h)} \right)^2,$$

and finding the minimum of $\chi^2$ with respect to six variables: $h$, $\varphi_1$, $\varphi_2$, $\varphi_3$, $\varphi_4$, and $\varphi_5$.

It would be favourable to have knowledge on the value of the sample resistance per unit surface area $\lambda$ determined by means of, for example, the van der Pauw method. The system of equations with known value of the resistance per unit surface area has the form

$$r_1 = \lambda \pi \ln \frac{G(\varphi_1 + \varphi_2, h)G(\varphi_1 + \varphi_6, h)}{G(\varphi_1, h)G(\varphi_1 + \varphi_2 + \varphi_6, h)},$$

$$r_2 = \lambda \pi \ln \frac{G(\varphi_2 + \varphi_3, h)G(\varphi_1 + \varphi_2, h)}{G(\varphi_2, h)G(\varphi_1 + \varphi_2 + \varphi_3, h)},$$

$$r_3 = \lambda \pi \ln \frac{G(\varphi_3 + \varphi_4, h)G(\varphi_2 + \varphi_3, h)}{G(\varphi_3, h)G(\varphi_2 + \varphi_3 + \varphi_4, h)},$$

$$r_4 = \lambda \pi \ln \frac{G(\varphi_4 + \varphi_5, h)G(\varphi_3 + \varphi_4, h)}{G(\varphi_4, h)G(\varphi_1 + \varphi_2 + \varphi_6, h)},$$

$$r_5 = \lambda\pi\ln\frac{G(\varphi_5+\varphi_6,h)G(\varphi_4+\varphi_5,h)}{G(\varphi_5,h)G(\varphi_1+\varphi_2+\varphi_3,h)},$$

$$r_6 = \lambda\pi\ln\frac{G(\varphi_1+\varphi_6,h)G(\varphi_5+\varphi_6,h)}{G(\varphi_6)G(\varphi_2+\varphi_3+\varphi_4)},$$

$$r_7 = \lambda\pi\ln\frac{G(\varphi_1+\varphi_2+\varphi_3,h)G(\varphi_2+\varphi_3+\varphi_4,h)}{G(\varphi_2+\varphi_3,h)G(\varphi_5+\varphi_6,h)},$$

$$r_8 = \lambda\pi\ln\frac{G(\varphi_2+\varphi_3+\varphi_4,h)G(\varphi_1+\varphi_2+\varphi_6,h)}{G(\varphi_3+\varphi_4,h)G(\varphi_1+\varphi_6,h)},$$

$$r_9 = \lambda\pi\ln\frac{G(\varphi_1+\varphi_2+\varphi_3,h)G(\varphi_1+\varphi_2+\varphi_6,h)}{G(\varphi_4+\varphi_5,h)G(\varphi_1+\varphi_2,h)}.$$

The homogeneity parameter $h$ is determined in such a way that six equations from the total number of nine are chosen and the system of six equations is solved with respect to six unknowns: $h$, $\varphi_1$, $\varphi_2$, $\varphi_3$, $\varphi_4$, and $\varphi_5$. Knowledge on the value of resistance per unit surface area $\lambda$ allows an increase in the accuracy of determining the homogeneity parameter $h$.

If the sample resistance per unit surface area $\lambda$ is known, the system of equations can be solved by means of the minimisation method. A quantity $\chi^2$ is defined as

$$\chi^2 = \left( r_1 - \lambda\pi\ln\frac{G(\varphi_1+\varphi_2,h)G(\varphi_1+\varphi_6,h)}{G(\varphi_1,h)G(\varphi_1+\varphi_2+\varphi_6,h)} \right)^2$$

$$+ \left( r_2 - \lambda\pi\ln\frac{G(\varphi_2+\varphi_3,h)G(\varphi_1+\varphi_2,h)}{G(\varphi_2,h)G(\varphi_1+\varphi_2+\varphi_3,h)} \right)^2$$

$$+ \left( r_3 - \lambda\pi\ln\frac{G(\varphi_3+\varphi_4,h)G(\varphi_2+\varphi_3,h)}{G(\varphi_3,h)G(\varphi_2+\varphi_3+\varphi_4,h)} \right)^2$$

$$+ \left( r_4 - \lambda\pi\ln\frac{G(\varphi_4+\varphi_5,h)G(\varphi_3+\varphi_4,h)}{G(\varphi_4,h)G(\varphi_1+\varphi_2+\varphi_6,h)} \right)^2$$

$$+ \left( r_5 - \lambda\pi\ln\frac{G(\varphi_5+\varphi_6,h)G(\varphi_4+\varphi_5,h)}{G(\varphi_5,h)G(\varphi_1+\varphi_2+\varphi_3,h)} \right)^2$$

$$+ \left( r_6 - \lambda\pi\ln\frac{G(\varphi_1+\varphi_6,h)G(\varphi_5+\varphi_6,h)}{G(\varphi_6)G(\varphi_2+\varphi_3+\varphi_4)} \right)^2$$

$$+ \left( r_7 - \lambda\pi\ln\frac{G(\varphi_1+\varphi_2+\varphi_3,h)G(\varphi_2+\varphi_3+\varphi_4,h)}{G(\varphi_2+\varphi_3,h)G(\varphi_5+\varphi_6,h)} \right)^2$$

$$+ \left( r_8 - \lambda\pi\ln\frac{G(\varphi_2+\varphi_3+\varphi_4,h)G(\varphi_1+\varphi_2+\varphi_6,h)}{G(\varphi_3+\varphi_4,h)G(\varphi_1+\varphi_6,h)} \right)^2$$

$$+ \left( r_9 - \lambda\pi\ln\frac{G(\varphi_1+\varphi_2+\varphi_3,h)G(\varphi_1+\varphi_2+\varphi_6,h)}{G(\varphi_4+\varphi_5,h)G(\varphi_1+\varphi_2,h)} \right)^2 ,$$

and the minimum value of $\chi^2$ is sought with respect to six variables: $h$, $\varphi_1$ $\varphi_2$, $\varphi_3$, $\varphi_4$, and $\varphi_5$.

The method according to the present invention is characterised by location of six contacts on the sample edge at arbitrary positions.

The contacts can be located in such a way that four-point resistances $r_1$, $r_2$, $r_3$, $r_4$, $r_5$, and $r_6$ are equal to each other. In the case of a sample in the form of an annulus, this is realised by arranging contacts on the edge of the annulus at equal angular distances. In the case of a sample with arbitrary shape, the positions of the contacts can be obtained by means of the conformal transformation method, or experimentally by trials and errors. Such arrangement of contacts allows determination of the degree of homogeneity $h$ from the equation

$$\frac{3r}{r_7+r_8+r_9} = H(h),$$

where $r = r_1 = r_2 = r_3 = r_4 = r_5 = r_6$, and function $H$ is defined as

$$H(h) = \frac{1}{2}\frac{\ln\dfrac{G^2(2\pi/3,h)}{G(\pi/3,h)G(\pi,h)}}{\ln\dfrac{G(\pi,h)}{G(2\pi/3,h)}}.$$

When the contact positions are known, determination of the homogeneity parameter $h$ is characterised with higher accuracy compared with what is achievable by solving the system of equations with unknown positions.

From the theory of conformal transformations it follows that the electric current distribution in a sample with an isolated single hole is equivalent to the current distribution in a sample in the form of an annulus. Currents and voltages as well as four-point resistances for an annulus, will not change after the application of a conformal transformation. As a result of a properly selected conformal transformation, the annulus can be transformed into any other geometrical figure with an isolated hole. Therefore, the formulae obtained for an annular sample are valid for samples with any other shape with an isolated hole. The homogeneity parameter is a measure of the hole size in the ideal case of a homogeneous sample with a hole. For a sample with more holes or continuous variations of sample material homogeneity within the sample, the exact theory of the problem is not formulated yet. However, the results of experiments show that the homogeneity parameter determined by means of the method according to the present invention carries essential information about the actual homogeneity of the sample.

The subject of the present invention is explained in more detail with the use of an example embodiment involving homogeneity measurements on a set of samples made of homogeneous sheet aluminium with a thickness of 0.1 mm, in the form of circles with a diameter of 351 mm. In such samples, an inhomogeneity is introduced in a controlled way in the form of a concentric hole. Table 2, column 1, gives the hole diameters. In column 11, theoretical values of the homogeneity parameter $h$ are given, the value of which for a circle with diameter $D$ and a concentric hole with diameter $d$ is $h = 2\ln(D/d)$. Columns 2 through 10 list the results of actual measurements of four-point resistances. The homogeneity parameter was determined by minimising the quantity $\chi^2$:

$$\chi^2 = \left( \frac{r_1}{\Sigma} - \frac{1}{m} \ln \frac{G(\varphi_1 + \varphi_2, h)G(\varphi_1 + \varphi_6, h)}{G(\varphi_1, h)G(\varphi_1 + \varphi_2 + \varphi_6, h)} \right)^2$$

$$+ \left( \frac{r_2}{\Sigma} - \frac{1}{m} \ln \frac{G(\varphi_2 + \varphi_3, h)G(\varphi_1 + \varphi_2, h)}{G(\varphi_2, h)G(\varphi_1 + \varphi_2 + \varphi_3, h)} \right)^2$$

$$+ \left( \frac{r_3}{\Sigma} - \frac{1}{m} \ln \frac{G(\varphi_3 + \varphi_4, h)G(\varphi_2 + \varphi_3, h)}{G(\varphi_3, h)G(\varphi_2 + \varphi_3 + \varphi_4, h)} \right)^2$$

$$+ \left( \frac{r_4}{\Sigma} - \frac{1}{m} \ln \frac{G(\varphi_4 + \varphi_5, h)G(\varphi_3 + \varphi_4, h)}{G(\varphi_4, h)G(\varphi_1 + \varphi_2 + \varphi_6, h)} \right)^2$$

$$+ \left( \frac{r_5}{\Sigma} - \frac{1}{m} \ln \frac{G(\varphi_5 + \varphi_6, h)G(\varphi_4 + \varphi_5, h)}{G(\varphi_5, h)G(\varphi_1 + \varphi_2 + \varphi_3, h)} \right)^2$$

$$+ \left( \frac{r_6}{\Sigma} - \frac{1}{m} \ln \frac{G(\varphi_1 + \varphi_6, h)G(\varphi_5 + \varphi_6, h)}{G(\varphi_6)G(\varphi_2 + \varphi_3 + \varphi_4)} \right)^2$$

$$+ \left( \frac{r_7}{\Sigma} - \frac{1}{m} \ln \frac{G(\varphi_1 + \varphi_2 + \varphi_3, h)G(\varphi_2 + \varphi_3 + \varphi_4, h)}{G(\varphi_2 + \varphi_3, h)G(\varphi_5 + \varphi_6, h)} \right)^2$$

$$+ \left( \frac{r_8}{\Sigma} - \frac{1}{m} \ln \frac{G(\varphi_2 + \varphi_3 + \varphi_4, h)G(\varphi_1 + \varphi_2 + \varphi_6, h)}{G(\varphi_3 + \varphi_4, h)G(\varphi_1 + \varphi_6, h)} \right)^2$$

$$+ \left( \frac{r_9}{\Sigma} - \frac{1}{m} \ln \frac{G(\varphi_1 + \varphi_2 + \varphi_3, h)G(\varphi_1 + \varphi_2 + \varphi_6, h)}{G(\varphi_4 + \varphi_5, h)G(\varphi_1 + \varphi_2, h)} \right)^2,$$

with respect to six variables: $h$, $\varphi_1$, $\varphi_2$, $\varphi_3$, $\varphi_4$, and $\varphi_5$ (under apparent condition: $\varphi_1 + \varphi_2 + \varphi_3 + \varphi_4 + \varphi_5 + \varphi_6 = 2\pi$). Column 12 gives the obtained values of the homogeneity parameter $h_{\text{exp}}$.

Table 2

| $d$ (mm) | $r_1$ ($\mu\Omega$) | $r_2$ ($\mu\Omega$) | $r_3$ ($\mu\Omega$) | $r_4$ ($\mu\Omega$) | $r_5$ ($\mu\Omega$) | $r_6$ ($\mu\Omega$) | $r_7$ ($\mu\Omega$) | $r_8$ ($\mu\Omega$) | $r_9$ ($\mu\Omega$) | $h_{\text{theoret}}$ | $h_{\text{exp}}$ |
|---|---|---|---|---|---|---|---|---|---|---|---|
| 1 | 2 | 3 | 4 | 5 | 6 | 7 | 8 | 9 | 10 | 11 | 12 |
| 6.2 | 38.5 | 38.5 | 38.25 | 38.25 | 38.25 | 38.25 | 27.50 | 27.50 | 27.00 | 8.1 | 6.6 |
| 15.5 | 38.50 | 38.50 | 38.50 | 39.00 | 39.00 | 39.00 | 27.50 | 28.00 | 28.00 | 6.2 | 5.7 |
| 30.5 | 40.00 | 40.50 | 40.50 | 40.00 | 40.50 | 40.25 | 29.50 | 29.50 | 30.00 | 4.9 | 4.7 |
| 60.5 | 42.00 | 42.50 | 42.00 | 42.50 | 42.00 | 42.50 | 32.75 | 34.25 | 33.50 | 3.5 | 3.5 |
| 121 | 53.50 | 53.00 | 53.00 | 52.75 | 53.50 | 52.50 | 49.50 | 50.00 | 49.50 | 2.1 | 2.1 |

The present invention allows the detection of holes, cracks, and voids in a material or the presence of fragments with electrical conductivity different with respect to the average conductivity of the sample. Application of the method according to the present invention is particularly favourable when used to test rolled sheet steel in which a delamination may occur in the course of the rolling process, or for testing welded sheet steel with large dimensions stored in stacks. Large metal sheets stored in stacks are difficult to test by means of common methods, such as ultrasonic or X-ray techniques, in view of the lack of access to individual sheets. A particularly favourable feature of the method according to the present invention is that the result of the measurement is expressed as a single parameter. This makes possible the identification and selection of the most homogeneous samples (or the most inhomogeneous ones) in a quick and effective way. Another favourable feature of the method according to the present invention is that it can be used to examine arbitrarily thin samples, e.g., layers of film deposited by means of sputtering or epitaxially, deposited from molecular beams, deposited by means of the chemical transport methods, or deposited electrolytically. The present invention can also be used to detect holes in graphene layers.

## Claims

1. A method for measuring homogeneity of a sample of electric current conducting material, comprising taking measurements of four-point resistances, **characterised by** arranging at least six contacts at different points on an edge of the sample and measuring at least six four-point resistances among the contacts; and determining the degree of homogeneity (h) of the sample by application of the theory of current distribution in a two-dimensional sample with an isolated hole for the measured at least six four-point resistances.

2. The method of claim 1 **characterised in that** said contacts are arranged in such a way that the six four-point resistances have the same value.

3. The method of claim 1 **characterised in that** the known value of the sample's resistance per unit area is used to increase the accuracy of determining the homogeneity parameter.

4. The method of claim 1 **characterised in that** the known value of the sample's resistance per unit area and known contact positions are used to increase the accuracy of determining the homogeneity parameter.

5. The method of claim 1 **characterised by** determining the degree of homogeneity (h) of the sample by solving six equations selected from the group comprising:

$$r_1 = \frac{\Sigma}{m} \ln \frac{G(\varphi_1 + \varphi_2, h) G(\varphi_1 + \varphi_6, h)}{G(\varphi_1, h) G(\varphi_1 + \varphi_2 + \varphi_6, h)},$$

$$r_2 = \frac{\Sigma}{m} \ln \frac{G(\varphi_2 + \varphi_3, h) G(\varphi_1 + \varphi_2, h)}{G(\varphi_2, h) G(\varphi_1 + \varphi_2 + \varphi_3, h)},$$

$$r_3 = \frac{\Sigma}{m} \ln \frac{G(\varphi_3 + \varphi_4, h) G(\varphi_2 + \varphi_3, h)}{G(\varphi_3, h) G(\varphi_2 + \varphi_3 + \varphi_4, h)},$$

$$r_4 = \frac{\Sigma}{m} \ln \frac{G(\varphi_4 + \varphi_5, h) G(\varphi_3 + \varphi_4, h)}{G(\varphi_4, h) G(\varphi_1 + \varphi_2 + \varphi_6, h)},$$

$$r_5 = \frac{\Sigma}{m} \ln \frac{G(\varphi_5 + \varphi_6, h) G(\varphi_4 + \varphi_5, h)}{G(\varphi_5, h) G(\varphi_1 + \varphi_2 + \varphi_3, h)},$$

$$r_6 = \frac{\Sigma}{m} \ln \frac{G(\varphi_1 + \varphi_6, h) G(\varphi_5 + \varphi_6, h)}{G(\varphi_6) G(\varphi_2 + \varphi_3 + \varphi_4)},$$

$$r_7 = \frac{\Sigma}{m} \ln \frac{G(\varphi_1 + \varphi_2 + \varphi_3, h) G(\varphi_2 + \varphi_3 + \varphi_4, h)}{G(\varphi_2 + \varphi_3, h) G(\varphi_5 + \varphi_6, h)},$$

$$r_8 = \frac{\Sigma}{m} \ln \frac{G(\varphi_2 + \varphi_3 + \varphi_4, h) G(\varphi_1 + \varphi_2 + \varphi_6, h)}{G(\varphi_3 + \varphi_4, h) G(\varphi_1 + \varphi_6, h)},$$

$$r_9 = \frac{\Sigma}{m} \ln \frac{G(\varphi_1 + \varphi_2 + \varphi_3, h) G(\varphi_1 + \varphi_2 + \varphi_6, h)}{G(\varphi_4 + \varphi_5, h) G(\varphi_1 + \varphi_2, h)},$$

wherein:

$$\Sigma = \sum_{i=1}^{9} r_i, \quad m = \ln g,$$

$$g = \frac{G(\varphi_1 + \varphi_2, h) G(\varphi_2 + \varphi_3, h) G(\varphi_3 + \varphi_4, h) G(\varphi_4 + \varphi_5, h) G(\varphi_5 + \varphi_6, h) G(\varphi_1 + \varphi_6, h)}{G(\varphi_1, h) G(\varphi_2, h) G(\varphi_3, h) G(\varphi_4, h) G(\varphi_5, h) G(\varphi_6, h)},$$

$$\varphi_1 + \varphi_2 + \varphi_3 + \varphi_4 + \varphi_5 + \varphi_6 = 2\pi.$$

$$G(\varphi, h) = \left| \sin \frac{\varphi}{2} \right| \prod_{n=1}^{\infty} \left( 1 - \frac{\cos \varphi}{\cosh hn} \right)$$

and wherein $r_i$ are the measured four-point resistances; and $\varphi_1$, $\varphi_2$, $\varphi_3$, $\varphi_4$ and $\varphi_5$ are dimensionless positions.

**Patentansprüche**

1. Verfahren zum Messen der Homogenität einer Probe eines Materials, das elektrischen Strom leitet, umfassend das Messen von Vier-Punkt-Widerständen, **dadurch gekennzeichnet, dass** mindestens sechs Kontakte an verschiedenen Punkten an einer Kante der Probe angeordnet werden und mindestens sechs Vier-Punkt-Widerstände der Kontakte gemessen werden; und Bestimmen des Homogenitätsgrades ($h$) der Probe durch Anwenden der Theorie der Stromverteilung in einer zweidimensionalen Probe mit einem isolierten Loch für die gemessenen mindestens sechs Vier-Punkt-Widerstände.

2. Verfahren nach Anspruch 1, **dadurch gekennzeichnet, dass** die Kontakte so angeordnet sind, dass die sechs Vier-Punkt-Widerstände denselben Wert haben.

3. Verfahren nach Anspruch 1, **dadurch gekennzeichnet, dass** der bekannte Wert des Widerstands der Probe pro Flächeneinheit zur Steigerung der Genauigkeit der Bestimmung des Homogenitätsparameters verwendet wird.

4. Verfahren nach Anspruch 1, **dadurch gekennzeichnet, dass** der bekannte Wert des Widerstands der Probe pro Flächeneinheit und die bekannten Kontaktpositionen zur Steigerung der Genauigkeit der Bestimmung des Homogenitätsparameters verwendet werden.

5. Verfahren nach Anspruch 1, **gekennzeichnet durch** die Bestimmung des Homogenitätsgrades ($h$) der Probe **durch** das Lösen von sechs Gleichungen ausgewählt aus der Gruppe umfassend:

$$r_1 = \frac{\Sigma}{m} \ln \frac{G(\varphi_1 + \varphi_2, h)G(\varphi_1 + \varphi_6, h)}{G(\varphi_1, h)G(\varphi_1 + \varphi_2 + \varphi_6, h)},$$

$$r_2 = \frac{\Sigma}{m} \ln \frac{G(\varphi_2 + \varphi_3, h)G(\varphi_1 + \varphi_2, h)}{G(\varphi_2, h)G(\varphi_1 + \varphi_2 + \varphi_3, h)},$$

$$r_3 = \frac{\Sigma}{m} \ln \frac{G(\varphi_3 + \varphi_4, h)G(\varphi_2 + \varphi_3, h)}{G(\varphi_3, h)G(\varphi_2 + \varphi_3 + \varphi_4, h)},$$

$$r_4 = \frac{\Sigma}{m} \ln \frac{G(\varphi_4 + \varphi_5, h)G(\varphi_3 + \varphi_4, h)}{G(\varphi_4, h)G(\varphi_1 + \varphi_2 + \varphi_6, h)},$$

$$r_5 = \frac{\Sigma}{m} \ln \frac{G(\varphi_5 + \varphi_6, h)G(\varphi_4 + \varphi_5, h)}{G(\varphi_5, h)G(\varphi_1 + \varphi_2 + \varphi_3, h)},$$

$$r_6 = \frac{\Sigma}{m} \ln \frac{G(\varphi_1 + \varphi_6, h)G(\varphi_5 + \varphi_6, h)}{G(\varphi_6)G(\varphi_2 + \varphi_3 + \varphi_4)},$$

$$r_7 = \frac{\Sigma}{m} \ln \frac{G(\varphi_1 + \varphi_2 + \varphi_3, h)G(\varphi_2 + \varphi_3 + \varphi_4, h)}{G(\varphi_2 + \varphi_3, h)G(\varphi_5 + \varphi_6, h)},$$

$$r_8 = \frac{\Sigma}{m} \ln \frac{G(\varphi_2 + \varphi_3 + \varphi_4, h)G(\varphi_1 + \varphi_2 + \varphi_6, h)}{G(\varphi_3 + \varphi_4, h)G(\varphi_1 + \varphi_6, h)},$$

$$r_9 = \frac{\Sigma}{m} \ln \frac{G(\varphi_1 + \varphi_2 + \varphi_3, h)G(\varphi_1 + \varphi_2 + \varphi_6, h)}{G(\varphi_4 + \varphi_5, h)G(\varphi_1 + \varphi_2, h)},$$

wobei:

$$\Sigma = \sum_{i=1}^{9} r_i, \quad m = \ln g,$$

$$g = \frac{G(\varphi_1 + \varphi_2, h)G(\varphi_2 + \varphi_3, h)G(\varphi_3 + \varphi_4, h)G(\varphi_4 + \varphi_5, h)G(\varphi_5 + \varphi_6, h)G(\varphi_1 + \varphi_6, h)}{G(\varphi_1, h)G(\varphi_2, h)G(\varphi_3, h)G(\varphi_4, h)G(\varphi_5, h)G(\varphi_6, h)},$$

$$\varphi_1 + \varphi_2 + \varphi_3 + \varphi_4 + \varphi_5 + \varphi_6 = 2\pi.$$

$$G(\varphi, h) = \left| \sin \frac{\varphi}{2} \right| \prod_{n=1}^{\infty} \left( 1 - \frac{\cos \varphi}{\cosh hn} \right)$$

und wobei es sich bei $r_i$ um die gemessenen Vier-Punkt-Widerstände handelt; und $\varphi_1$, $\varphi_2$, $\varphi_3$, $\varphi_4$ und $\varphi_5$ dimensionslose Positionen sind.

## Revendications

1. Procédé de mesure de l'homogénéité d'un échantillon de matériau conducteur du courant électrique, comprenant la prise de mesures de résistances à quatre points, **caractérisé par** l'agencement d'au moins six contacts en différents points sur un bord de l'échantillon et la mesure d'au moins six résistances à quatre points parmi les contacts; et la détermination du degré d'homogénéité ($h$) de l'échantillon par application de la théorie de la distribution de courant dans un échantillon à deux dimensions avec un trou isolé pour lesdits au moins six résistances à quatre points mesurées.

2. Procédé selon la revendication 1, **caractérisé en ce que** lesdits contacts sont agencés de telle sorte que les six résistances à quatre points ont la même valeur.

3. Procédé selon la revendication 1, **caractérisé en ce que** la valeur connue de la résistance de l'échantillon par unité de surface sert à augmenter la précision de la détermination du paramètre d'homogénéité.

4. Procédé selon la revendication 1, **caractérisé en ce que** la valeur connue de la résistance de l'échantillon par unité de surface et la position connue des contacts servent à augmenter la précision de la détermination du paramètre d'homogénéité.

5. Procédé selon la revendication 1, **caractérisé par** la détermination du degré d'homogénéité (h) de l'échantillon en résolvant les six équations choisis dans le groupe comprenant:

$$r_1 = \frac{\Sigma}{m} \ln \frac{G(\varphi_1 + \varphi_2, h)G(\varphi_1 + \varphi_6, h)}{G(\varphi_1, h)G(\varphi_1 + \varphi_2 + \varphi_6, h)},$$

$$r_2 = \frac{\Sigma}{m} \ln \frac{G(\varphi_2 + \varphi_3, h)G(\varphi_1 + \varphi_2, h)}{G(\varphi_2, h)G(\varphi_1 + \varphi_2 + \varphi_3, h)},$$

$$r_3 = \frac{\Sigma}{m} \ln \frac{G(\varphi_3 + \varphi_4, h)G(\varphi_2 + \varphi_3, h)}{G(\varphi_3, h)G(\varphi_2 + \varphi_3 + \varphi_4, h)},$$

$$r_4 = \frac{\Sigma}{m} \ln \frac{G(\varphi_4 + \varphi_5, h)G(\varphi_3 + \varphi_4, h)}{G(\varphi_4, h)G(\varphi_1 + \varphi_2 + \varphi_6, h)},$$

$$r_5 = \frac{\Sigma}{m} \ln \frac{G(\varphi_5 + \varphi_6, h)G(\varphi_4 + \varphi_5, h)}{G(\varphi_5, h)G(\varphi_1 + \varphi_2 + \varphi_3, h)},$$

$$r_6 = \frac{\Sigma}{m} \ln \frac{G(\varphi_1 + \varphi_6, h)G(\varphi_5 + \varphi_6, h)}{G(\varphi_6)G(\varphi_2 + \varphi_3 + \varphi_4)},$$

$$r_7 = \frac{\Sigma}{m} \ln \frac{G(\varphi_1 + \varphi_2 + \varphi_3, h)G(\varphi_2 + \varphi_3 + \varphi_4, h)}{G(\varphi_2 + \varphi_3, h)G(\varphi_5 + \varphi_6, h)},$$

$$r_8 = \frac{\Sigma}{m} \ln \frac{G(\varphi_2 + \varphi_3 + \varphi_4, h)G(\varphi_1 + \varphi_2 + \varphi_6, h)}{G(\varphi_3 + \varphi_4, h)G(\varphi_1 + \varphi_6, h)},$$

$$r_9 = \frac{\Sigma}{m} \ln \frac{G(\varphi_1 + \varphi_2 + \varphi_3, h)G(\varphi_1 + \varphi_2 + \varphi_6, h)}{G(\varphi_4 + \varphi_5, h)G(\varphi_1 + \varphi_2, h)},$$

où:

$$\Sigma = \sum_{i=1}^{9} r_i, \quad m = \ln g,$$

$$g = \frac{G(\varphi_1 + \varphi_2, h)G(\varphi_2 + \varphi_3, h)G(\varphi_3 + \varphi_4, h)G(\varphi_4 + \varphi_5, h)G(\varphi_5 + \varphi_6, h)G(\varphi_1 + \varphi_6, h)}{G(\varphi_1, h)G(\varphi_2, h)G(\varphi_3, h)G(\varphi_4, h)G(\varphi_5, h)G(\varphi_6, h)},$$

$$\varphi_1 + \varphi_2 + \varphi_3 + \varphi_4 + \varphi_5 + \varphi_6 = 2\pi.$$

$$G(\varphi, h) = \left| \sin \frac{\varphi}{2} \right| \prod_{n=1}^{\infty} \left( 1 - \frac{\cos \varphi}{\cosh hn} \right)$$

et où $r_i$ sont les résistances mesurées à quatre points; et $\varphi_1$, $\varphi_2$, $\varphi_3$, $\varphi_4$ et $\varphi_5$ des positions sans dimension.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6943571 B2

### Non-patent literature cited in the description

- **W. HAIN.** Monitoring material property transformations with electrical resistivity. *Materials Evaluation,* 1989, vol. 47, 619-630
- **R.L. COHEN ; K.W. WEST.** Characterization of metals and alloys by electrical resistivity measurements. *Materials Evaluation,* 1983, vol. 41, 1074-1077
- **J. VAN DER PAUW.** *Philips Research Reports,* 1958, vol. 13, 1
- **L. J. VAN DER PAUW.** *Philips Technical Review,* 1958, vol. 20, 220
- **SZYMANSKI et al.** *Physics Letters A,* 2013, vol. 377, 651-654